Europäisches Patentamt

European Patent Office

Office européen des brevets

(11) Publication number: 0 258 875
A2

# (12) EUROPEAN PATENT APPLICATION

(21) Application number: 87112750.2

(22) Date of filing: 01.09.87

(51) Int. Cl.⁴: **C08J 3/00** , C08L 27/18 , C08K 3/04 , C09K 3/10

(30) Priority: 02.09.86 IT 2156486

(43) Date of publication of application:
09.03.88 Bulletin 88/10

(84) Designated Contracting States:
AT BE DE ES FR GB IT NL SE

(71) Applicant: AUSIMONT S.p.A.
31, Foro Buonaparte
I-20121 Milano(IT)

(72) Inventor: Biancardi, Valerio
20, via Fiamma
I-20129 Milan(IT)
Inventor: Valentini, Luigi
9, via Pascali
I-20090 Limito fr.Pioltello (MI)(IT)

(74) Representative: Barz, Peter, Dr. et al
Patentanwälte Dipl.-Ing. G. Dannenberg Dr.
P. Weinhold, Dr. D. Gudel Dipl.-Ing. S.
Schubert, Dr. P. Barz Siegfriedstrasse 8
D-8000 München 40(DE)

(54) Manufactured articles endowed with high characteristics of low-temperature plasticity, based on polytetrafluoroethylene or tetrafluoroethylene copolymers, and pastes for their preparation.

(57) An extrudable paste prepared by starting from aqueous dispersions of tetrafluoroethylene (TFE) homopolymers or copolymers with comonomers amounts lower than 0.5% by weight, a paraffin oil (vaseline) or silicone oil, a coagulating liquid and optionally graphite, which makes it possible to obtain, by extrusion, a rod endowed with high characteristics of low-temperature plasticity, which does not show the occurrence of longitudinal fractures when submitted to a pressure in the transversal direction.

# MANUFACTURED ARTICLES ENDOWED WITH HIGH CHARACTERISTICS OF LOW-TEMPERATURE PLASTICITY, BASED ON POLYTETRAFLUOROETHYLENE OR TETRAFLUOROETHYLENE COPOLYMERS, AND PASTES FOR THEIR PREPARATION.

The present invention relates to a paste based on tetrafluoroethylene (TFE) homopolymers or copolymers, with amounts of comonomers lower than 0.5% by weight, and a paraffin or silicone oil, possibly containing graphite, being well suitable for being processed by extrusion, to form an extruded article of continuous shape, endowed with high characteristics of low-temperature plasticity, which is used with particularly favourable results, for various types of sealing gaskets, eventually showing lubricating characteristics, such as sealing gaskets for flanges operating under high temperature and high pressure (textile machinery) conditions or for packings.

From the market manufactured articles, e.g., sealing gaskets, are known, which are made from extruded articles obtained by starting from a paste comprising polytetrafluoroethylene (PTFE) powder, graphite and paraffin oil.

The preparation of this paste consists in dispersing graphite in a blend of oil and volatile solvent, subsequently adding PTFE powder. Thus, by mixing, a paste is obtained, from which said solvent is removed by an oven-heating at a suitable temperature for preventing oil losses.

By extruding the so-prepared paste, rods can be obtained, which however suffer from the drawback of not having a high low-temperature plasticity, and of being easily subject to longitudinal fractures when a pressure is applied to them in the transversal direction relatively to their longitudinal axis. This latter drawback is particularly undesirable when such extruded articles are used as sealing gaskets.

Applicant has surprisingly found now that an extrusion-processable paste prepared by starting from aqueous dispersions of TFE homopolymers or copolymers, with amounts of comonomers lower than 0.5% by weight, an oil of paraffin oil or silicone oil type, a coagulating liquid, and optionally graphite, makes it possible to obtain, by extrusion, a rod endowed with high characteristics of low-temperature plasticity, and which does not break in the longitudinal direction when to it a pressure is applied in the transversal direction.

The paste according to the present invention comprises homopolymers or copolymers of TFE in amounts comprised within the range of from 60 to 85% by weight, oil in amounts comprised within the range of from 15 to 20% by weight and graphite in amounts comprised within the range of from 0 to 20% by weight, preferably of from 5 to 10% by weight.

A preferred composition contains 70% by weight of PTFE, 20% by weight of oil and 10% by weight of graphite.

If the oil is present in amounts lower than 15% by weight, the paste results dry (low plasticity); if, on the contrary, the oil is present in amounts higher than 20% by weight, it separates from the mixture, and gives the paste an excessive oiliness.

When graphite is present, if the amount thereof is greater than 20% by weight, the paste generates, when extruded, a stiff rod (low plasticity).

The paste according to the invention is prepared by mixing, under stirring, an aqueous dispersion based an a TFE homopolymer or copolymer with comonomers amounts lower than 0.5% by weight, with paraffin or silicone oil, and eventually graphite. The addition of the elements which constitute the mixture can be carried out according to any order.

In general, such a stirring is preferred, as to obtain a good dispersion or emulsion of the various constituents.

Finally, with the mass being kept still stirred, a liquid capable of coagulating the above said mixture is added.

The larger the amount of the coagulating liquid, the shorter the time for coagulation to occur.

The coagulated matter is filtered off and dried at a temperature high enough for eliminating the coagulating liquid and water.

For the preparation of the pastes of the invention, any aqueous dispersion of PTFE can be used, on condition that it is in the form of a latex. Generally, latexes are used, wherein the PFTE particles have an average diameter comprised within the range of from 0.15 to 0.40 microns, preferably of from 0.20 to 0.35 microns. Said aqueous dispersions contain PTFE concentrations comprised within the range of from 10 to 70% by weight, preferably of from 50 to 60% by weight and are generally stabilized with any ionic or non-ionic surfactants, present in amounts comprised within the range of from 0.5 to 10% by weight, preferably of from 1.5 to 4% by weight.

The above-said dispersions can also be based on copolymers of $C_2F_4$ with one or more comonomers, in particular with $C_3F_6$, or with alkylvinylethers, or with $C_3F_6$ and perfluorovinylethers, wherein the comonomer is present in amounts lower than 0.5% by weight.

In case of PTFE dispersions, those can be used, which are based, e.g., on TEFLON [R] (0.18-0.26 microns, on FLUON[R](0.19-0.27) microns), on ALGOFLON [R] (0.20-0.35 microns).

In particular, the use is preferred of ALGOFLON[R]dispersions containing approximately 60% by weight of PTFE having particles with an average diameter of 0.20-0.30 microns, about 3% by weight of non-ionic surfactant (stabilizer) (TRITON[R]), at both basic and acidic pH values.

The surfactants contained in the aqueous dispersion can be of non-ionic type, such as polyethyleneglycols, polyvinylalcohols, alkylpolyoxyethylenes (RIOKLEN[R]), arylpolyoxyethylenes (TRITON[R]), polyoxyethylenepolyoxypropylene block copolymers (PLURONIC[R]), or of ionic type, such as cetyltrimethylammonium bromide or chloride, cetylpyridinium chloride, hexadecyltrimethylammonium bromide or chloride.

The graphite suitable for the paste of the invention is that generally used as a filler for polytetrafluoroethylene.

The oil suitable to be used for the present invention is any mineral oil (paraffinic oil) or silicone oil.

The coagulating liquids are preferably volatile enough, such as to be evaporated off at temperatures which, at the same time, make it possible to prevent considerable oil losses.

Such coagulating liquids are selected, e.g., from alipha tic alcohols, methyl alcohol being excluded, preferably having from 2 to 8 C atoms, ketones, such as, e.g., acetone and methylethylketone, esters such as, e.g., ethyl acetate; aluminum sulphate aqueous solutions.

Use of ethyl alcohol is preferred.

As above said, the pastes according to the present invention are generally extruded for obtaining manufactured articles, in general, rods.

Another use of the pastes of the present invention, due to its plasticity, is as sealing filler for leaks and holes.

The method used for obtaining the rods as well as their characterizations, are discussed in detail in the following Examples.

The rods obtained from the paste of the present invention show a high low-temperature plasticity, and do not show the occurrence of longitudinal fractures when a pressure is applied to them in a transversal direction.

In general, the test used consists in submitting 10-mm rods to a transversal pressure, until a 70% reduction in diameter is obtained, and in verifying the existence or less of longitudinal fractures.

Furthermore, as it can be seen in the Examples, the rods of the invention are endowed with good elasticity values. This is an essential characteristic when the rods are used for sealing gaskets.

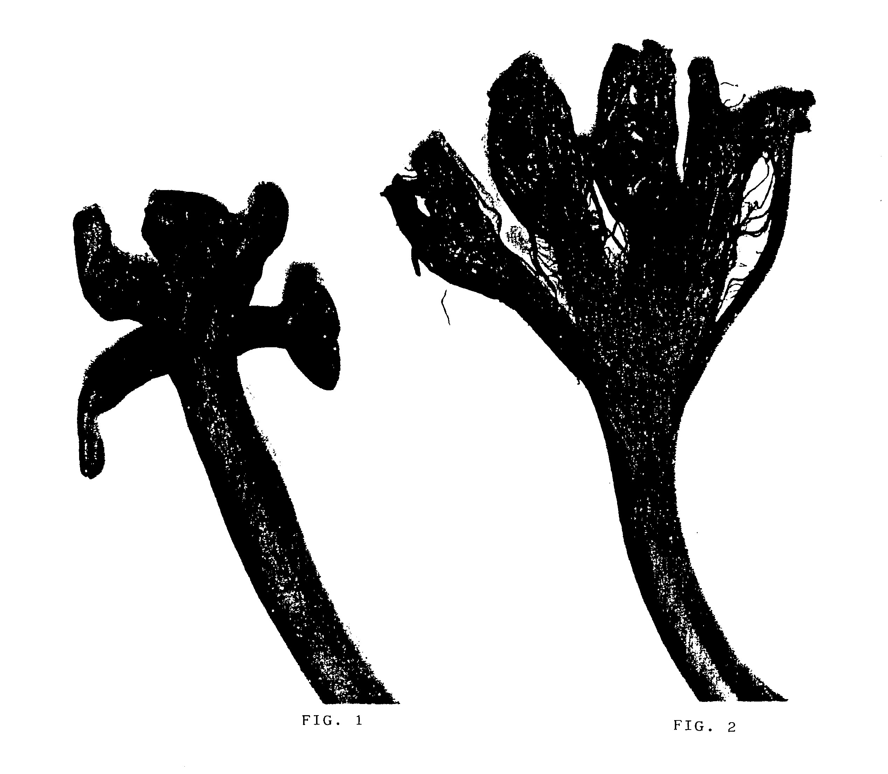

Figures 1 and 2 show two rods (Figure 1 according to the invention; Figure 2 obtained from PTFE powder) which were submitted to a manual fibre opening test.

The fibres of the sample are, opened in correspondence of the end portion of the sample by a manual procedure.

When undergoing such fibre opening test, the rod of the prior art shows a behaviour that makes it not much suitable for use as a gasket.

In contrast therewith, the rod of the invention, by not showing fibre separation, is endowed with better characteristics, and, furthermore, with a longer life.

In the Examples, the rods are furthermore characterized from the mechanical viewpoint by submitting the specimen to a longitudinal tensile stress, for measuring the elongation at break, the ultimate tensile stress, the elastic modulus thereof; to a compression in a transversal direction, for measuring the deformation of 70% of the initial diameter, and the residual stress after a 10-minute stress.

As compared to the rods of the prior art, the rods of the invention show, according to the measuring methods as hereunder indicated, a lower elastic modulus, in particular, lower than 2 MPa; a max stress lower than 1 MPa, and a residual stress lower than 0.2 MPa.

## CHARACTERIZATION OF THE PASTES

The pastes obtained according to the Examples are submitted to a low-temperature extrusion by a piston-extruder.

Rods of 10 mm of diameter are obtained, which are tested according to the following procedures.

## A TEST :

Longitudianl tensile stress test: the measurements are carried out by means of an electronic dynamometer Instron 1185 at the temperature of 23° C, relative humidity of 50%, speed 50 mm/min; specimen length = 25 mm; screw-clamps with board-coated jaws.

In Table 1: the maximum stress, the elongation at break, the elastic modulus are reported.

B TEST:

Relaxation under compression to 70% imposed deformation in transversal direction.

To the rod a compression transversal relatively to the longitudinal axis is applied, until a thickness of 3 mm is reached (70% deformation), and the maximum stress is measured.

Furthermore, the residual stress after 10 minutes of transversal compression is measured.

The following Examples are supplied for the purpose of purely illustrating the present invention, without being limitative thereof.

## EXAMPLE 1

To 600 g of an aqueous dispersion of polytetrafluoroethylene (Algoflon (R) D60V, 60% by weight of PTFE, pH 3) 100 g of vaseline oil (ROL Oil(R) type OB/30) (13.3% by weight), and 50 g of graphite (6.7% by weight), manufactured by CARBOSIND, Type 3A63, are added and the whole is stirred up to complete homogenization. With stirring being still continued (at approximately 1, 100 rpm), 350 cc is added of 90% ethyl alcohol, and stirring is continued up to complete coagulation. The obtained mass is filtered over a 150-mesh (90-micron) nylon filter, the filter panel is oven-dried at 120°C for 2 hours, and a product is obtained, as a plastic paste of a uniform gray colour.

In Table 1 the mechanical characteristics of the product are reported.

## EXAMPLE 2

A paste is prepared as in Example 1, but using an ALGOFLON (R) D60A dispersion (60% by weight of PTFE, pH 9-10), and with the percentages of oil and graphite as shown in Table 1, Nos. 2 and 2a.

## EXAMPLE 3

A paste is prepared as in Example 2, but wherein graphite is not added. The rod obtained, having white colour, when submitted to the fibre opening test, shows the characteristics as displayed in Figure 1.

## EXAMPLE 4

A paste is prepared as in Example 1, but using an ALGOFLON (R) DVC dispersion (60% by weight of tetrafluoroethylene copolymer modified with 0.05% by weight of $C_3F_6$).

When the rod is submitted to the fibre opening test, it shows the characteristics as displayed in Figure 1.

## EXAMPLE 5

A paste is prepared as in Example 2, but using, as the coagulating liquid, acetone instead of ethyl alcohol.

The mechanical data are reported in the Table, with the percentages of graphite and oil.

## EXAMPLE 6

A paste is prepared as in Example 2, but using 15% of General Electric type SF-96/100 silicone oil. The mechanical data are reported in Table 1.

## EXAMPLE 7

A paste is prepared as in Example 3, but using an oil amount corresponding to 20% by weight as referred to the paste.

The mechanical data at various graphite levels are reported in the Table under numbers 7, 7a, 7b, 7c, 7d.

## Comparative Example 8 (With PTFE Powder)

50 g of vaseline oil is blended with 100 cc of 90% ethyl alcohol. 30 g of graphite is added, and the mass is kept stirred until complete graphite dispersion.

This mixture is added to 220 g of Algoflon(R) DF1 (a PTFE powder having an average particle diameter of 380-480 microns), previously wetted with 100 cc of 90% ethyl alcohol and stirred up to perfect homogenization. The mixture is filtered over a 150-mesh (90-micron) nylon filter, and the filter panel is oven-dried at 120°C for 2 hours, a paste being obtained which is less plastic than as obtained in Example 1, and which shows a fibre opening pattern as displayed in Figure 2. The mechanical data are reported in Table 1.

## Comparative Example 9

A paste is prepared as in Example 8, but using perchloroethylene in place of ethyl alcohol; the paste obtained is similar to that of Example 8.

The data are reported in Table 1.

## EXAMPLE 10

Example 1 is repeated with the percentages as indicated in Table 1.

The mechanical data referring to various levels of oil and graphite are reported in Table 1 under the numbers: 10, 10a, 10b, 10c.

## EXAMPLE 11

Example 10a is repeated, but using an Algoflon stabilized with a cationic surfactant (0.2% of cetyltrimethylammonium bromide) and having a pH value of 9.

The data are reported in Table 1.

TABLE 1

MECHANICAL PROPERTIES

| EXAMPLE No. | Composition Of Samples | | Longitudinal Traction (A Test) | | | Relaxation Under Compression To 70% Imposed Deformation (B Test) | |
|---|---|---|---|---|---|---|---|
| | Graphite (%) | Oil (%) | MAX Stress (MPa) | Elongation At Break | Elastic Modulus (MPa) | MAX Stress (MPa) | Residual Stress After 10 Minutes of Test (MPa) |
| 1 | 6.7 | 13.3 | 0.51 | 226 | 1.14 | 0.36 | 0.098 |
| 2 | 4 | 16 | 0.34 | 240 | 0.72 | 0.38 | 0.091 |
| 2a | 7.7 | 15.4 | 0.32 | 140 | 0.56 | 0.41 | 0.084 |
| 5 | 5 | 15 | 0.22 | 164 | 0.56 | 0.36 | 0.09 |
| 6 | 5 | 15 | 0.65 | 199 | 1.77 | 0.62 | 0.17 |
| 7 | 5 | 20 | 0.11 | 253 | 0.12 | 0.16 | 0.04 |
| 7a | 1 | 20 | 0.23 | 430 | 0.29 | 0.14 | 0.03 |
| 7b | 5 | 20 | 0.12 | 218 | 0.23 | 0.17 | 0.04 |
| 7c | 10 | 20 | 0.09 | 138 | 0.14 | 0.14 | 0.03 |
| 7d | 15 | 20 | 0.19 | 95 | 0.25 | 0.20 | 0.04 |
| 8 | 10 | 16.7 | 2.26 | 335 | 7.76 | 1.97 | 0.58 |

## TABLE 1 (cont.d)

### MECHANICAL PROPERTIES

| EXAMPLE | Composition Of Samples | | Longitudinal Traction (A Test) | | | Relaxation Under Compression To 70% Imposed Deformation (B Test) | |
|---|---|---|---|---|---|---|---|
| No. | Graphite (%) | Oil (%) | MAX Stress (MPa) | Elongation At Break | Elastic Modulus (MPa) | MAX Stress (MPa) | Residual Stress After 10 Minutes of Test (MPa) |
| 9 | 10 | 16.7 | 2.4 | 268 | 9.47 | 1.42 | 0.34 |
| 10 | 1 | 15 | 0.16 | 294 | 0.31 | 0.30 | 0.08 |
| 10a | 5 | 15 | 0.17 | 195 | 0.36 | 0.29 | 0.08 |
| 10b | 10 | 15 | 0.21 | 138 | 0.45 | 0.35 | 0.09 |
| 10c | 15 | 15 | 0.19 | 95 | 0.52 | 0.30 | 0.07 |
| 11 | 5 | 15 | 0.24 | 178 | 0.44 | 0.35 | 0.09 |

0 258 875

## Claims

1. Extrusion-processable paste comprising a homopolymer or a copolymer of tetrafluoroethylene with comonomer amounts lower than 0.5% by weight, an oil of paraffin or silicone oil type, and optionally graphite, prepared by blending, under stirring, an aqueous dispersion of the fluorinated polymer, in the form of a latex, with the oil, and optionally the graphite, then adding, under stirring, a coagulating liquid, and then drying the so-obtained product.

2. Paste according to claim 1, wherein the fluorinated polymer is present in amounts comprised within the range of from 60 to 85% by weight, the oil is present in amounts comprised within the range of from 15 to 20% by weight, the amount of graphite is comprised within the range of from 0 to 20% by weight, and the latex comprises PTFE having a particle size of from 0.15 to 0.40 microns.

3. Paste according to claim 1 or 2, wherein the fluorinated polymer used in form of aqueous dispersion shows an average particle diameter comprised within the range of from 0.20 to 0.30 microns.

4. Manufactured articles obtained by extrusion of the paste according to one or more of claims 1 to 3, which are endowed with high characteristics of low-temperature plasticity, and which do not show longitudinal fractures if they are submitted to a pressure applied in transversal direction.

5. The use of the paste according to one or more of claims 1 to 3 as a sealing filler.

FIG. 1

FIG. 2

0 258 875